Europäisches Patentamt

European Patent Office

Office européen des brevets

(11) Publication number : **0 564 119 A2**

# EUROPEAN PATENT APPLICATION

(21) Application number : 93301990.3

(22) Date of filing : 16.03.93

(51) Int. Cl.$^5$ : **G11B 33/08,** G11B 33/14, G11B 33/12

(30) Priority : 03.04.92 GB 9207304

(43) Date of publication of application :
06.10.93 Bulletin 93/40

(84) Designated Contracting States :
DE FR GB

(71) Applicant : INTERNATIONAL BUSINESS
MACHINES CORPORATION
Old Orchard Road
Armonk, N.Y. 10504 (US)

(72) Inventor : Heath, John Stewart
34 Olivers Battery Road Winchester
Hampshire SO22 4JB (GB)

Inventor : Bolton, Ivor William
"Lindlea", Oakwood Avenue, Otterbourne
Winchester, Hampshire SO21 2ED (GB)
Inventor : Castle, Frank Eric
35 Courtenay Road
Winchester, Hampshire SO23 7ER (GB)
Inventor : Maddock, David
29 Ethelbury Avenue, Swaythling
Southampton, Hampshire SO2 3DG (GB)
Inventor : Hatchett, Michael Robert
6322 Desert Flame Drive
San Jose, California (US)
Inventor : Gaunt, David Sydney
4 Lingwood Close, Bassett
Southampton, Hampshire SO1 7EJ (GB)

(74) Representative : Burt, Roger James, Dr.
IBM United Kingdom Limited Intellectual
Property Department Hursley Park
Winchester Hampshire SO21 2JN (GB)

(54) Disk data storage device with cooling fins.

(57)   A data storage device comprises a sealed HDA 54 supported by shock mounts 52 within a housing 50. The HDA has fins 70 through which cooling air flows, the fins providing an enhanced heat dissipation surface. The air is ducted between the fins by a layer of airtight, resilient material 100 that fills the sway space between the HDA fins and the housing. The high pressure, low airflow rate characteristics of such an arrangement result in very efficient cooling.

FIG. 2

EP 0 564 119 A2

## Field of the Invention

This invention relates to disk data storage devices, and in particular to storage devices having fins for enhanced air cooling.

## Background of the Invention

Disk data storage devices such as disk drives used in computer systems store data in concentric tracks on rotating disks. Read/write heads are moved from one track to another to access the data. The rotation of the disks and the head accesses involve rapid motion that requires the dissipation of significant amounts of electrical power. The resultant heating, if not controlled, is detrimental to the reliability of the storage device. As advances in silicon technology produce ever faster computer systems, increases in the speed of data storage devices are necessary to match the speed at which the data is processed. Such speed increases can be obtained by rotating the disks more rapidly, and by reducing head access times. Both of these techniques further increase the power to be dissipated from the device.

Disk drives used in most computer systems are cooled by simple forced convection. Air is typically circulated by an axial flow fan, passing over the external surfaces of the drive before returning to the room. Modern miniaturisation of the disk drive electronics allows them to be located alongside the head-disk assembly (HDA), thereby enabling the HDA to be cooled without obstruction on both of its two largest and flattest surfaces.

GB 2166584 discloses a disk drive having a sealed head-disk assembly (HDA), with fins on the HDA cover. The fins present an increased surface area for the cooling airflow, and so enhance the dissipation of heat generated inside the HDA. The cooling airflow may be generated by either natural or forced air circulation. The HDA unit is supported inside a rack on shock or isolation mounts which require a clearance (known as sway space) all round the HDA. The rack may also contain a fan to produce the airflow for cooling. In typical prior art disk drives, the space necessary to allow adequate airflow for cooling is greater than that required for shock mount sway. A characteristic of such cooling systems is that relatively large volumes of air are required to flow through the system in order to adequately cool the drive, because of inefficient heat transfer between the disk drive surface and the airflow. One result of this is an obtrusive acoustic noise that is becoming increasingly unacceptable to users.

Some more modern, smaller disk drives do not have shock mounts per se, since they are much lighter than their predecessors and therefore less vulnerable to shocks. In such disk drives the HDA can be attached more or less rigidly to its housing, which may either be the computer frame itself or a dedicated container. Nevertheless, clearance around the HDA is still required for the passage of cooling air.

A somewhat older design is shown in US 3825951, in which air is drawn through a filter into the HDA chamber itself. This air passes through fins underneath the HDA baseplate before entering the HDA. A thermally-insulating cover is attached to the fins. This pattern of air circulation is designed to equalise the temperature of the various disk drive components.

A separate but relevant aspect of the packaging of disk drives, especially for small and midrange computers, is that a set of standards for the external dimensions of products exist. These are de facto standards, known as form factors, rather than formal standards, but impose strict constraints on the dimensions and cooling arrangements of products. Typical form factors used for disk drives in personal computers are "5.25 inch" (133.35mm) and "3.5 inch" (8.89) (these numbers represent the approximate diameters of the data storage disks used). The former has height, width and depth dimensions of 3.25x5.75x8.0 inches (82.55x146.0x203.2 mm) respectively, whilst the latter measures 1.625x4.0x5.75 inches (41.28x101.6x146.05 mm). There is a continuing shift to still smaller sizes. As a result, the requirement for quieter but more effective cooling in future disk drives must be achieved without any increase in product dimensions.

## Disclosure of the Invention

Accordingly, the invention provides a disk data storage device comprising a head disk assembly (HDA) unit supported within a housing, said HDA unit comprising a sealed casing containing one or more data storage disks, said casing having a plurality of outwardly-directed fins attached thereto, there being a clearance between said fins and the housing; said device being characterised in that said clearance between the fins and the housing is substantially occupied by a resilient, airtight material.

In prior art devices having open-topped fins, air is forced into the gap between the fins, usually by ram effect. However, the flow of air between the fins is resisted by the build-up of boundary layers on the fins, and so the air spills out. (The boundary layer is the region adjacent a fixed surface in which viscous drag operates to reduce the velocity of fluid flow. It is the boundary layer thickness that determines the heat transfer coefficient). As a result comparatively little air actually flows along between the fins, and so they do little to improve cooling efficiency. The build-up of boundary layers can be minimised by careful design of the separation and size of fins, but for the air flows found in most computer systems this implies large fin separations (ie fewer fins). This means that the increase in heat transfer surface is relatively small, which again limits the cooling efficiency.

The resilient material effectively turns the fins into passages. Unlike fins, passages retain all the air driven into them for their entire length. The same amount of heat is transferred with a much lower air flow by forcing the air to flow at an increased velocity across the heat transfer surfaces (ie the fins forming the passage walls). The resilient material therefore ducts the airflow through constricted passages: the greater the proportion of air forced to flow actually between the fins, the more efficient the cooling. Although the passages require space which could otherwise be occupied by disks storing information, the loss of capacity is not very great as the passages can be quite small. In fact some space may even be saved, because the increase in cooling efficiency means that the height of the passages plus the thickness of the resilient material may be less than the large clearance between the HDA and its housing required in prior art cooling methods.

In one preferred embodiment, the HDA unit is supported within the housing on the shock mounts, and the clearance between the fins and the housing provides sway space for the shock mounts. The resilient material occupying the clearance turns the fins into passages without adversely affecting the shock mounts. For maximum cooling efficiency, the resilient material should occupy all the sway space, being in contact with both the tops of the fins and the surrounding housing, and extending along the full length of the fins. This prevents any leakage of air through the housing which does not pass between the fins. The resilient material itself should be sufficiently compressible to provide a suitable shock mounting in conjunction with the shock mounts themselves. Filling the sway space with the resilient material instead of air increases the effective stiffness of the shock mounting, so it may be necessary to modify the shock mounts slightly to accommodate this. Preferably the resilient material would be an acoustic foam, such as a polyester or polyurethane based acoustic foam. Such foam is cheap, light, and has the compliance to take up any manufacturing tolerances in the HDA or housing. It can be made into complex shapes to block alternative air paths through the storage device, and to ensure reasonable leak tightness of the air flow system to force the air through the fin channels.

It is also preferred that a thermally conductive layer thin in comparison with the clearance between the fins and the housing is located between the fins and the resilient layer. This conductive layer aids cooling by allowing heat transfer from the fourth side of the passage. If the conductive layer is rigid, then it can be made to act as an effective acoustic absorber by drilling a series of holes in it along the length of each passage. These reduce the flow of noise along the passages, resulting in quieter operation of the disk file.

In very small disk drives, which are less susceptible to shock, there may be no need for sway space between the fins and the housing, and so the fins can extend all the way to the HDA cover housing. Accordingly, the invention also provides a disk data storage device comprising a head disk assembly (HDA) unit supported within a housing, said HDA unit comprising a sealed casing containing one or more data storage disks, said casing having a plurality of outwardly-directed fins attached thereto, said device being characterised in that the fins extend into contact with the housing to form channels for cooling air flow.

Again, this design is based on the idea of significantly increasing cooling efficiency by forcing air to flow along passages adjacent the HDA, but in this case the fins are capped by the HDA housing itself rather than a resilient material. In practice however, it may be difficult to have the fins in contact with the housing along all their length, which may lead to leakage, and having the fins fixed to the housing may produce too rigid a mounting for the HDA. By contrast, a resilient material such as foam is cheap, compliant, and easy to form into irregularly shaped barriers to block airflow outside the fins. Therefore foam may be used in some disk drives even if there is no need for a clearance between the fins and the HDA housing from a shock mounting point of view. Some designs may combine both approaches according to how shape and other considerations dictate, having some fins capped by the housing and some by the foam. Alternatively some fins may be capped by a resilient material and the housing along different parts of their length.

Whichever embodiment is used, passages still have some problems with boundary layer build-up which reduces their cooling efficiency above a certain length. However, interrupting the fins breaks up the boundary layers and prevents them from becoming too large. One possible technique is to have sets of parallel coextensive fins staggered with respect to one another. Alternatively, the fins might be interdigitated.

Cooling efficiency is maximised when the grooves formed by the fins have relatively small dimensions, since for a given airflow this both reduces the boundary layer thickness, and increases the ratio of surface area to air flow area, maximising the surface area available for heat transfer. The proportions of the fins govern those of the resulting passages, and these in turn determine the pressure drop required from the fan. Because the passages present a constricted path for the flow of air, the pressure drop is increased above that for prior art cooling. In a preferred embodiment the fins are spaced at less than 6mm, the pressure drop is at least 20 Pa, and the airflow rate is less than about 4 litres per second (such an airflow rate is much less than with prior art cooling techniques for all but the smallest disk drives). Preferably therefore, a radial flow fan is used, which has a lower air flow volume and higher pressure characteristic than the axial flow fans conventionally used to cool disk drives. A laminar flow, radial flow fan is perhaps best suited to meeting these requirements.

A disk data storage device according to the invention is much quieter than most prior art devices since the lower air flow volume and higher pressure characteristic reduce the noise from the cooling system, and are also well-suited to laminar flow radial fans which tend to be relatively quiet. Furthermore, if a resilient material is used it can damp vibrations of the HDA casing and can also be chosen to have good sound absorption properties, so that it attenuates noise passing along the passages.

Brief Description of the Drawings

Figure 1 shows a data storage subsystem, with top and side panels removed, for use with the disk data storage device of the invention;
Figure 2 is an exploded view of a disk data storage device according to the invention, for use with the subsystem of Figure 1;
Figure 3 is a plan view of the disk data storage device of Figure 2; and
Figure 4 is a detail of the disk data storage device of Figure 2, showing the fins and resilient material.

Detailed Description

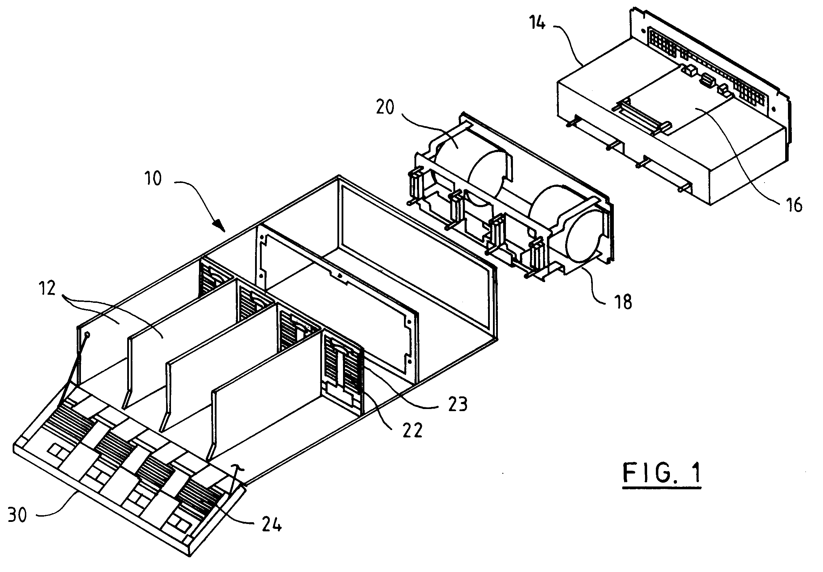

Figure 1 illustrates a data storage subsystem for housing units such as optical or magnetic disk drives. The subsystem comprises a chassis 10 (shown with the top and one side removed), having four receiving bays 12, a power supply 14, a controller card 16, and a fan unit 18 for circulating cooling air. Two radial flow fans 20 draw cooling air from the front of the subsystem in through vents 24 on the front cover 30, past the inserted units, and through vents 22 on an interior bulkhead 23.

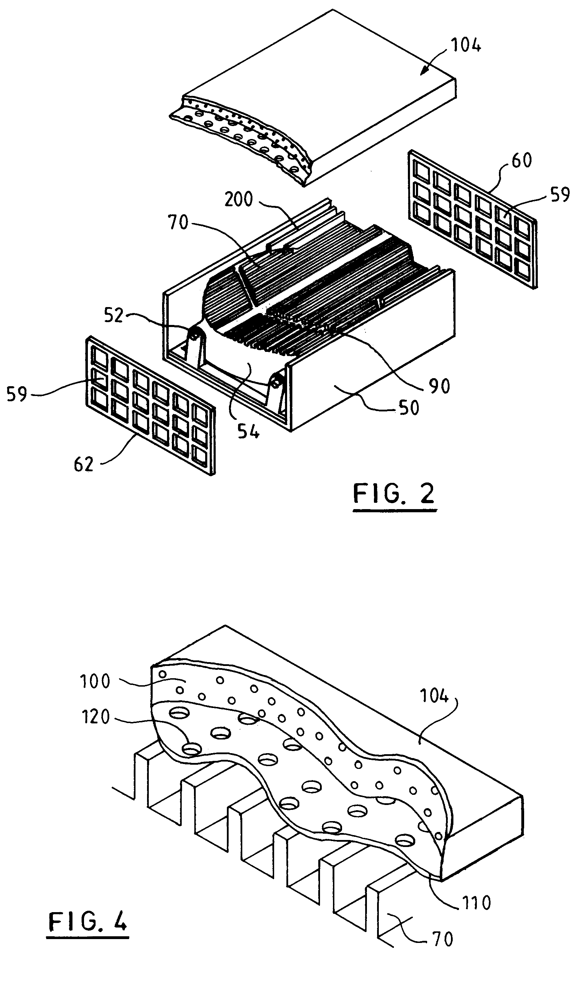

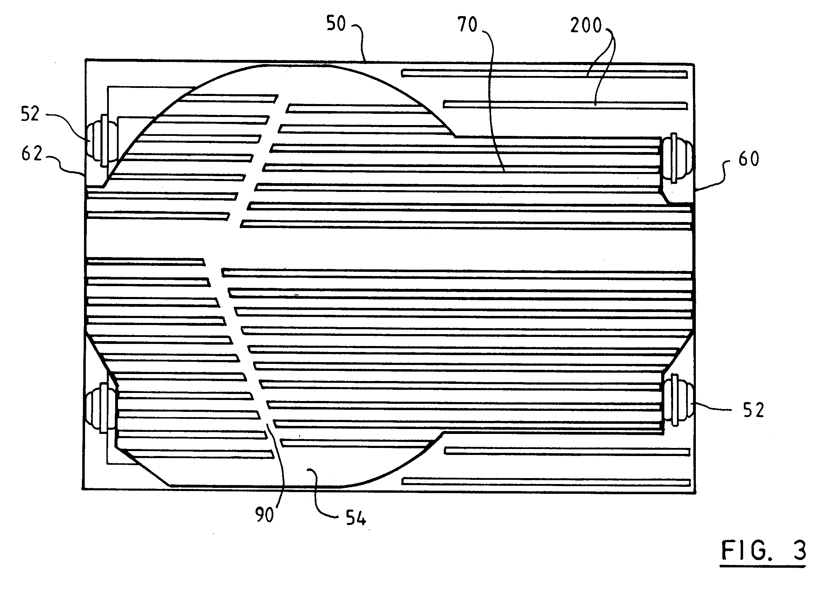

A typical unit for use in the subsystem of Figure 1 is a magnetic disk drive, shown in Figures 2 and 3. This disk drive includes a head-disk assembly (HDA) 54 which is a sealed enclosure containing the data storage disk(s) and associated head(s). The HDA is supported on shock mounts 52 inside an outer housing 50. There is a clearance of several millimetres between the HDA casing and the outer housing, which represents the sway space associated with the shock mounts. There are grills 59 in the front and back walls 60, 62 of the housing 50 to allow cooling air to flow into and out of the housing past the HDA. The unit essentially completely fills its receiving bay 12, with the outer housing closely fitting the chassis walls, so that air drawn by the fans through the vent 24 is compelled to flow through the unit via grills 59, thereby cooling the HDA (clearly as an alternative the flow direction could be reversed to go from fans to the unit). Connectors on the fan unit 18 extend through bulkhead 23 and unit wall 60 to provide power and signals to the disk drive (nb the detail of how the grill 59 in rear wall 60 allows these connectors to pass has been omitted for simplicity from Figures 2 and 3).

The top and bottom surfaces of the HDA have fins 70 on. The width, height, pitch and layout of these fins are optimised for the specific cooling requirements of the HDA. Typically the fins would be spaced less than about 6 mm apart. How thin the fins can be is limited mainly by casting requirements (to probably no less than 1 mm), rather than cooling considerations. The pressure drop would typically be 20 Pa. Some bulky high end disk drives have previously used such a high pressure drop, but only with very large airflows, and have been very noisy as a result. Conventional cooling systems for small devices (5.25 inch form factor or less) used in personal computer systems have used much lower pressure drops.

The fins are interrupted along their lengths 90, with the second set of fins being staggered (ie shifted sideways) with respect to the first. Having a break in the fins along their lengths interrupts the boundary layers on either side of each fin, preventing the boundary layers from becoming too large, and so improves heat transfer between the fins and the cooling air flow. The staggering, by introducing a degree of turbulence, also helps to enhance the heat transfer.

A layer of plastic foam 100 is placed between the HDA fins and the top and bottom surfaces 104 of the housing, as is shown most clearly in Figure 4. This foam layer is substantially airtight, and so forces the cooling air to flow in between the fins (ie effectively turning them into passages), whilst at the same time it is resilient enough not to degrade the shock performance of the disk drive. The foam also serves as an acoustic absorber, and attenuates the noise from the HDA. The degree of absorption depends on the noise emission spectrum of the disk drive, but for a noise emission spectrum predominantly between 2 kHz and 4kHz, the use of a foam with an absorption coefficient in the range 0.7 to 0.9 should lead to a typical duct acoustic attenuation of 2-3 dB for broad band noise, and reductions of 5 dB or more for discrete tones. The absorption characteristics of the foam can be matched to some extent to the noise emission spectrum of the disk drive, allowing 6mm or less of foam to be used. Furthermore, the foam also helps to dampen resonances of the HDA casting. Typically a polyester or polyurethane based acoustic foam, or other substantially airtight material with suitable resilience, acoustic absorption, resistance to abrasion, and fire retardance, could be used.

The disk drive also has electronics cards 200 mounted alongside the HDA that must also be well-cooled. The space allowed for airflow past them must be such as to provide sufficient cooling, without offering such a low resistance path that all the air flows past the cards instead of between the fins. If necessary, flexible foam baffles that can accommodate the HDA sway can be used to restrict the airflow.

The plastic foam 100 has a thermally conducting coat 110 which acts as a fourth heat transfer surface and improves the cooling efficiency. In the embodiment shown in Figure 4, the thermally conducting coat is a thin but fairly rigid metal sheet with a set of holes 120 drilled along each passage. The holes result in improved attenuation of noise along the passages, which otherwise act as conduits conveying noise from the fans at the rear of the subsystem out to the users at the front. In an alternative embodiment (not shown) the rigid metal sheet is replaced by a layer of aluminium foil attached to the inside of the plastic foam. This has the same cooling advantages as the rigid sheet, but does not attenuate noise travelling along the passages. It has been found experimentally that including a fourth conducting surface produces a 25% reduction in temperature difference between HDA and air. Since for the HDA investigated the fins were such that the channels were approximately square in cross-section, the increase in thermal conductance for this particular case was equal to the increase in heat transfer surface area of the channels.

The foam is in contact with the housing wall, whilst the rigid metal sheet abuts the tops of the fins. This maximises cooling efficency, there being no gaps above the fins to allow the air to escape from the grooves, or to avoid flowing through them. Likewise, the foam and metal sheet extend along essentially the entire length of the finned HDA, to again maximise cooling efficiency by retaining the air in the passages along their whole lengths.

A wind tunnel test was performed to compare the cooling characteristics of a prototype disk drive utilising the principles of the invention with a broadly comparable conventional disk drive (IBM Model 0681). In both cases the HDA cases were placed in a wind tunnel, and cooling air forced between the HDA casing and the tunnel walls. The prototype disk drive had fins on its HDA casing approximaately 1mm thick, with a 4mm spacing. The height of the fins was 2.5mm in some places and 3.5mm in others. The space between the tunnel walls and the tops of the fins was completely filled with foam. A layer of aluminium foil was applied to the surface of the foam adjacent to the fins (the experiment was also performed without the layer of aluminium foil, which resulted in a slightly poorer cooling performance). The conventional disk drive by contrast has a smooth HDA casing.

The results of the test are listed in Table 1. The two HDAs have very comparable surface areas, but the thickness of the surrounding air passage is much greater for the conventional HDA. Both HDAs are configured to fit within the industry standard form factors. The conventional HDA is cooled with three times the air flow rate of the prototype HDA, but it can be seen that the temperature rise of the prototype HDA is only 8.7 degrees compared with 12 degrees for the conventional one. The conventional HDA is regarded as being about the industry average in terms of power rating.

TABLE 1

| | | | A | B | |
|---|---|---|---|---|---|
| 1 | Circumference of HDA | - | 0.38 | 0.34 | m |
| 2 | Thickness of air passage | - | 0.01 | 0.002 | m |
| 3 | Air channel cross-section | 1x2 | 0.0038 | 0.00047 | $m^2$ |
| 4 | Mean channel air velocity | - | 1.6 | 4.2 | $m\ s^{-1}$ |
| 5 | Total air flow | 3x4 | 0.006 | 0.002 | $m^3\ s^{-1}$ |
| 6 | Heat transfer coefficient | - | 20.6 | 29.9 | $W\ m^{-2}\ K^{-1}$ |
| 7 | Length of HDA | - | 0.2 | 0.2 | m |
| 8 | Projected surface area of HDA | - | 0.076 | 0.068 | $m^2$ |
| 9 | Extended surface area of HDA | - | 0.076 | 0.106 | $m^2$ |
| 10 | Thermal conductance | 6x9 | 1.56 | 3.17 | $W\ K^{-1}$ |
| 11 | Power dissipated by HDA | - | 17.0 | 17.0 | W |
| 12 | Temperature difference HDA-air | 11/10 | 10.9 | 5.4 | K |
| 13 | Mean air temp rise in channel | - | 1.1 | 3.3 | K |
| 14 | Total temperature rise of HDA | 12+13 | 12.0 | 8.7 | K |
| 15 | Air pressure drop across HDA | (measured) | 5.0 | 40.0 | Pa |

Notes:

A is the conventional disk drive, an IBM 0681, and B is a prototype disk drive according to the present invention.

The second column indicates arithmetical relationships between rows, although not the order in which they were actually derived (eg the heat transfer coefficient between the HDA and the surrounding air, Row 6, was calculated from measurements of Rows 9, 11, and 12).

Row 13 is equal to half the temperature difference between the input (room) air temperature, and the output air temperature (both measured). Row 12 is the temperature difference between the HDA and the temperature of the immediately surrounding air (taken as the mean of the input and output air temperatures).

Closer inspection of the figures in Table 1 shows that the mean temperature rise of the air in the channels is much greater for the prototype HDA. As a result of this difference, the smaller air flow actually manages to carry away more heat than the larger airflow for the conventional drive, as evidenced by the fact that for the same power rating the prototype HDA is cooler. The increased efficiency is due both to the increased surface area and to the improved heat transfer per unit area. Not surprisingly the power required by the fan does increase, but in general it is not difficult to provide this extra power. Instead, the more demanding requirement is having to support a larger pressure drop, which is why radial flow fans are preferred, although very efficient axial ones may be used.

The recommended airflow clearance for cooling the conventional HDA is around 8mm, as against the 3mm recommended sway space clearance. By contrast, the prototype HDA requires a clearance of 3mm for the fins, plus about an additional 3mm for sway space. Thus the total clearance is reduced from 8 mm down to around 6mm, which allows the HDA casing to be slightly larger yet still fit within the same form factor. The prototype disk file is therefore cooler and quieter than the conventional disk file without any sacrifice (and indeed a slight gain) in the physical storage space available.

**Claims**

1.  A disk data storage device comprising a head disk assembly (HDA) unit (54) supported within a housing (50), said HDA unit comprising a sealed casing containing one or more data storage disks, said casing having a plurality of outwardly-directed fins (70) attached thereto, there being a clearance between said fins and the housing (50);

    said device being characterised in that said clearance between the fins and the housing is substantially occupied by a resilient, airtight material (100).

2.  A disk data storage device as claimed in claim 1, in which the HDA unit is supported within said housing by shock mounts (52), and said clearance between the fins and the housing provides sway space for the shock mounts.

3.  A disk data storage device as claimed in any preceding claim, in which the resilient airtight medium has an acoustic absorption coefficient between 0.7 and 0.9 for the frequency range 2 kHz to 4kHz.

4.  A disk data storage device as claimed in any preceding claim, further comprising a thermally conductive layer (110) between said fins and said resilient material, said thermally conductive layer being thin in comparison with said clearance between the fins and the housing.

5.  A disk data storage device as claimed in claim 4, in which said thermally conductive layer is a rigid layer with rows of holes (120) therein, said rows of holes being aligned with the channels formed between the fins.

6.  A disk data storage device as claimed in any preceding claim, in which said resilient material is acoustic foam.

7.  A disk data storage device as claimed in claim 6, in which said acoustic foam is polyester or polyurethane based.

8.  A disk data storage device comprising a head disk assembly (HDA) unit (54) supported within a housing (50), said HDA unit comprising a sealed casing containing one or more data storage disks, said casing having a plurality of outwardly-directed fins (70) attached thereto

    said device being characterised in that the fins extend into contact with the housing to form channels for cooling air flow.

9.  A disk data storage device as claimed in any preceding claim, in which the physical dimensions and spacing of the fins are adapted for forced air cooling with a pressure drop of greater than approximately 20 Pa.

10. A disk data storage device as claimed in claim 9, in which the physical dimensions and spacing of the fins are further adapted for forced air cooling with a flow rate of less than approximately 0.004 $m^3$ $s^{-1}$.

11. A disk data storage device as claimed in any preceding claim, in which adjacent fins are separated by less than approximately 6mm.

12. A disk data storage device as claimed in any preceding claim, in which said plurality of fins are substantially in parallel and in evenly spaced relationship with one another.

13. A disk data storage device as claimed in any preceding claim, in which the fins have one or more breaks along their lengths.

14. A disk data storage device as claimed in claim 13, in which the portion of a fin after a break is parallel to but laterally offset from the portion of the fin before the break.

15. A data storage subsystem including a fan (20) and a disk data storage device as claimed in any preceding claim, said fan being adapted to force air to flow through the disk data storage device.

16. A data storage subsystem as claimed in claim 15, in which said fan is a radial flow fan.

FIG. 1

FIG. 2

FIG. 4

FIG. 3